# EUROPEAN PATENT SPECIFICATION

(11) **EP 1 480 452 B1**
(45) Date of publication and mention of the grant of the patent: **26.04.2006**
(21) Application number: 04102236.9
(22) Date of filing: 20.05.2004
(51) Int. Cl.: H04N 5/225

(54) **Camera apparatus**
Kameravorrichtung
Dispositif de caméra

(30) Priority: 20.05.2003 KR 2003032003
(43) Date of publication of application: 24.11.2004
(73) Proprietor: SAMSUNG ELECTRONICS CO., LTD., Suwon-si, Gyeonggi-Do 442-742 (KR)
(72) Inventor: Kim, Yong-ho, Geumcheon-gu, Seoul (KR)
(74) Representative: Read, Matthew Charles

(56) References cited:
- EP-A- 1 422 932
- PATENT ABSTRACTS OF JAPAN vol. 1999, no. 07, 31 March 1999 (1999-03-31) & JP 9 186914 A (SAMSUNG ELECTRON CO LTD), 15 July 1997 (1997-07-15)
- PATENT ABSTRACTS OF JAPAN vol. 1998, no. 05, 30 April 1998 (1998-04-30) & JP 10 023363 A (SONY CORP), 23 January 1998 (1998-01-23)

## Description

The present invention relates to a camera apparatus comprising a main body, control means, user input means, a plurality of image capturing means and selecting means.

In general, digital still cameras convert images, captured through lenses, into digital signals and store the digital signals in or on a recording medium, such as a hard disc or a memory card. Since the captured images are stored in or on the recording medium, instead of on film, the digital images can be input directly into a computer without the need for a scanner or the like. It is therefore easy to edit and modify digital pictures generated by such digital still cameras by connecting the digital camera to an external computer. Furthermore, digital still cameras are similar in size and shape to conventional cameras making them easy to carry. A known type of digital still camera comprises a lens unit, a memory unit, a signal conversion unit, a display unit and so on. Such digital still cameras are mainly used to capture still images due to the capacity of the recording medium for storing the images. Although some digital still cameras have the ability to capture moving pictures, it is not usually possible to take such moving pictures for a long period of time. Furthermore, since most digital still cameras are not provided with means for storing and reproducing sound, they are not appropriate for capturing, storing and reproducing moving pictures. In order to satisfy consumer demands, recording/reproducing devices, such as camcorders, are widely and generally available for recording/reproducing images and sounds on/from a recording medium, such as a tape.

A known type of camcorder comprises a lens unit, a signal conversion unit and a deck unit for recording images and reproducing images on a display unit. Such a camcorder usually employs a cassette tape as a recording medium, which is loaded in the deck unit to record moving pictures. Furthermore, the camcorder is provided with a microphone and a speaker and can take and store pictures in the loaded cassette tape for a period of one hour or more. Some camcorders also have the ability to capture still images, but camcorders are mainly used to take moving pictures since they typically have poor still image quality compared to digital still cameras. Furthermore, camcorders have a complicated structure with more functions than digital still cameras, meaning that camcorders are relatively large and expensive.

As stated above, however, in order to utilize the respective functions of both the digital still camera and the camcorder, a user has to purchase both of the products. Thus, there is the problem that there is a high cost to the consumer and, furthermore, the consumer is inconvenienced by having to carry around both of the products.

In order to solve these problems, a combined digital camera/camcorder has been developed, which unites a camcorder and a digital still camera into a single case and is known as a "digital camera/camcorder" or "DuoCam".

In order to capture and store images in a storage medium with the DuoCam, at least two separate sets of buttons are generally required. One set of buttons is separately provided for controlling the digital camera to capture and store images in a memory and a second set of buttons is provided for controlling the digital camcorder to take and record pictures on a tape. When performing the image-capturing operations with the separate sets of buttons, however, a user must check to determine if the DuoCam is in the digital camera mode or in the digital camcorder mode and use the appropriate buttons that correspond to that particular mode. This causes a great deal of inconvenience as well as increasing the amount of buttons required, which makes a combined digital camera-camcorder product larger in size.

Thus, there is a need for a combined digital camera/camcorder product that does not require two sets of buttons to operate the different functions of the digital camera and camcorder respectively.

A camera apparatus, according to the present invention, comprises a main body, control means, user input means, a plurality of image capturing means and selecting means, wherein the plurality of image capturing means are disposed in a unit which is rotatably attached to the main body, the selecting means comprises means for detecting the position of the unit relative to the main body and outputting a position signal and the control means is configured to be responsive to a signal from the user input means to operate one of said plurality of image capturing means, selected in dependence on said position signal, to capture image data, the selecting means being configured to deactivate the unit when rotated to a predetermined position.

Preferably, the plurality of image capturing means comprises first image capturing means for capturing still images and second image capturing means for capturing moving images.

Embodiments of the present invention will now be described, by way of example, with reference to the accompanying drawings, in which:
Figure 1 is a perspective view illustrating an embodiment of a combination image-capturing apparatus according to the present invention;
Figure 2 is a block diagram illustrating the combination image-capturing apparatus of Figure 1;
Figures 3A to 3E illustrate the respective positions of the combination image-capturing unit of Figure 1 when a user rotates the combination image-capturing unit in 45-degree steps in a clockwise direction;
Figure 4 is a view illustrating the rotation of the internal units of the combination image-capturing unit of Figures 1 and 2;
Figure 5 is a perspective view illustrating an example of the mode selection switch unit of Figure 2;
Figure 6 is a view illustrating a situation in which the DSC image-capturing unit of Figure 2 is selected by the switch unit of Figure 5;
Figure 7 is a perspective view illustrating another example of the mode selection switch unit of Figure 2;
Figure 8 is a view illustrating a situation in which neither of the image-capturing units of Figure 2 are selected by the switch unit of Figure 7;
Figure 9 is a view illustrating yet another example of the mode selection switch unit of Figure 2; and
Figure 10 is a flow chart illustrating an embodiment of a control method for the image-capturing apparatus of Figures 1 and 2.

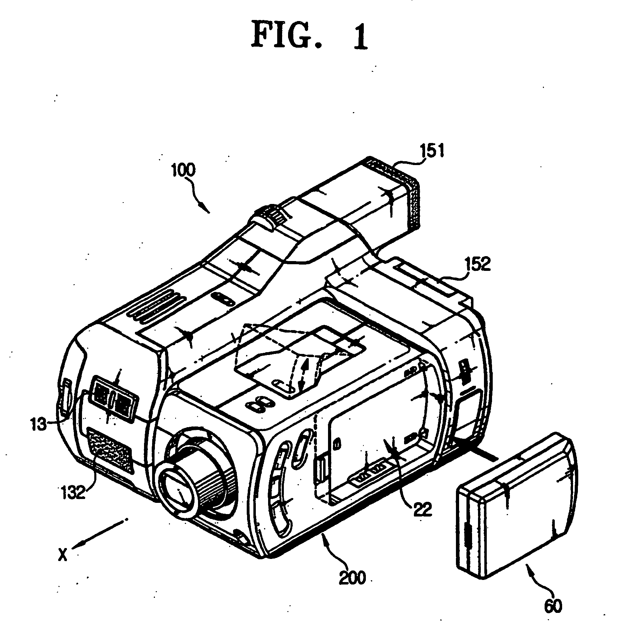

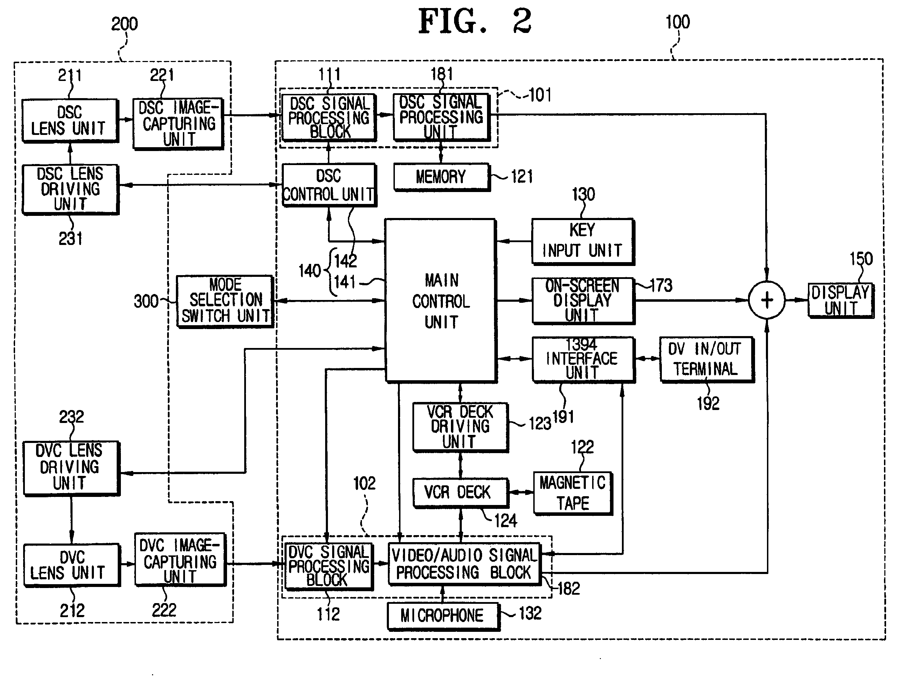

Referring to Figures 1 and 2, the combination image-capturing apparatus (or camera), referred to as "DuoCam", is provided with a main body 100, a combination image-capturing unit 200 coupled to the main body 100 and a mode selection switch unit (or selecting means) 300.

Referring to Figure 2, the combination image-capturing unit 200 comprises a digital still camera (DSC) lens unit 211, a DSC image-capturing unit 221, a DSC lens driving unit 231, a digital video camcorder (DVC) lens unit 212, a DVC image-capturing unit 222 and a DVC lens driving unit 232. The DSC lens unit 211 and the DSC image-capturing unit 221 are driven independently from the DVC lens unit 212 and the DVC image-capturing unit 222 since the kinds of images to be captured may be different. A battery cavity 22 (see Figure 1) is also provided on the combination image-capturing unit 200 in order for a battery 60 to be detachably mounted therein.

Referring to Figure 2, the DSC lens driving unit 231 drives the DSC lens unit 211 in accordance with control signals provided by DSC control unit 142. An optical image focused through the DSC lens unit 211 is photoelectrically converted into an electric signal in the DSC image-capturing unit 221 and the converted signal is sent to the DSC signal processing block 111. The DSC image-capturing unit 221 reads out data in a progressive scanning mode since progressive scanning is the method generally preferred in processing still-image data. Of course, it is appreciated that other methods may also be used. According to the progressive scanning method, one frame is captured at a time rather than dividing the frame into fields, enabling very detailed still images to be obtained by a camera using progressive scanning.

The DVC lens driving unit 232 drives the DVC lens unit 212 in accordance with control signals provided by the main control unit 141. An optical image focused through the DVC lens unit 212 is photoelectrically converted into an electric signal in the DVC image-capturing unit 222 and the converted signal is sent to the DVC signal processing block 112. The DVC image-capturing unit 222 reads out charges accumulated in each cell based on an interlace scanning method. Interlace scanning is a method in which odd and even fields of one frame are alternately read as image information every 1/60 seconds. Interlace scanning is generally used for capturing moving pictures. If, however, a fast moving object is captured by the DVC image-capturing unit 222, the moving object appears with fine lines that cross the image horizontally. These horizontal lines result from a phase difference due to the movement of the object during the time period of 16.67 milliseconds. In this case, it is possible to remove the horizontal lines by using filters.

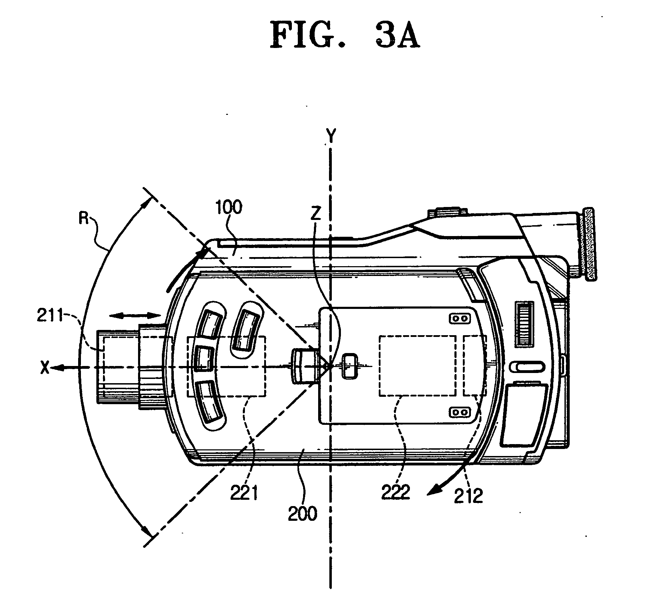

Referring to Figures 3A to 3E, the combination image-capturing unit 200 is attached to one side of the main body 100 in such a manner that it can be rotated by at least 180° about a Z-axis by the user's manipulation. Image-capturing is performed by either the DSC image-capturing unit 221 or the DVC image-capturing unit 222, which are provided in the combination image-capturing unit 200, in dependence on the rotation angle of the combination image-capturing unit 200 with respect to the main body 100. Furthermore, image-capturing is performed by an image-capturing unit positioned in a range R, which projects in a forward direction between ±45 degrees with respect to an X-axis.

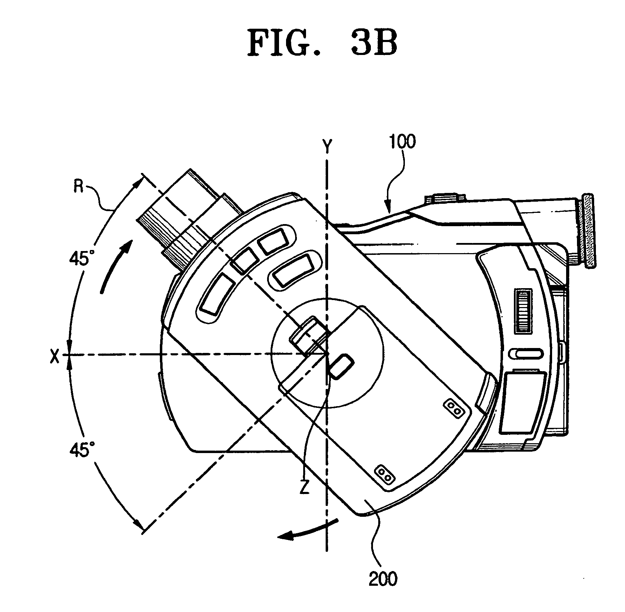

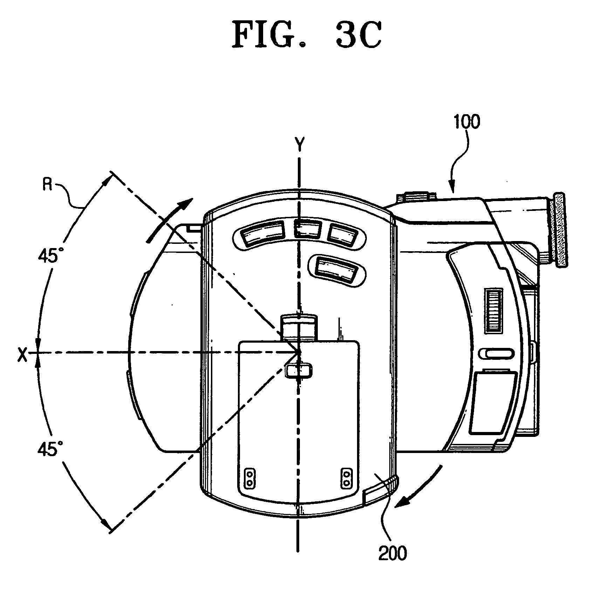

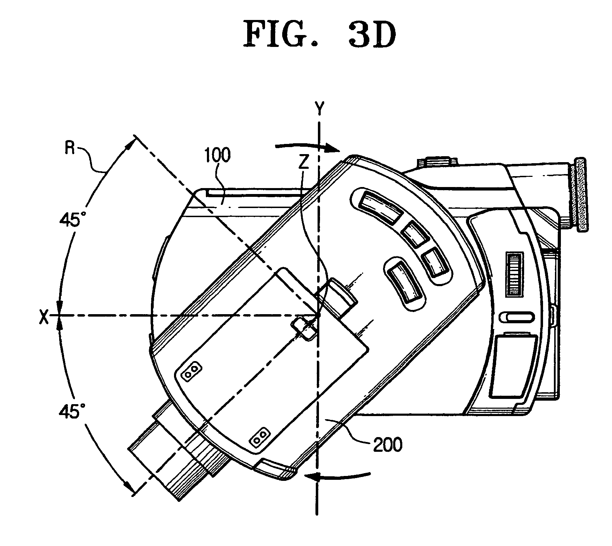

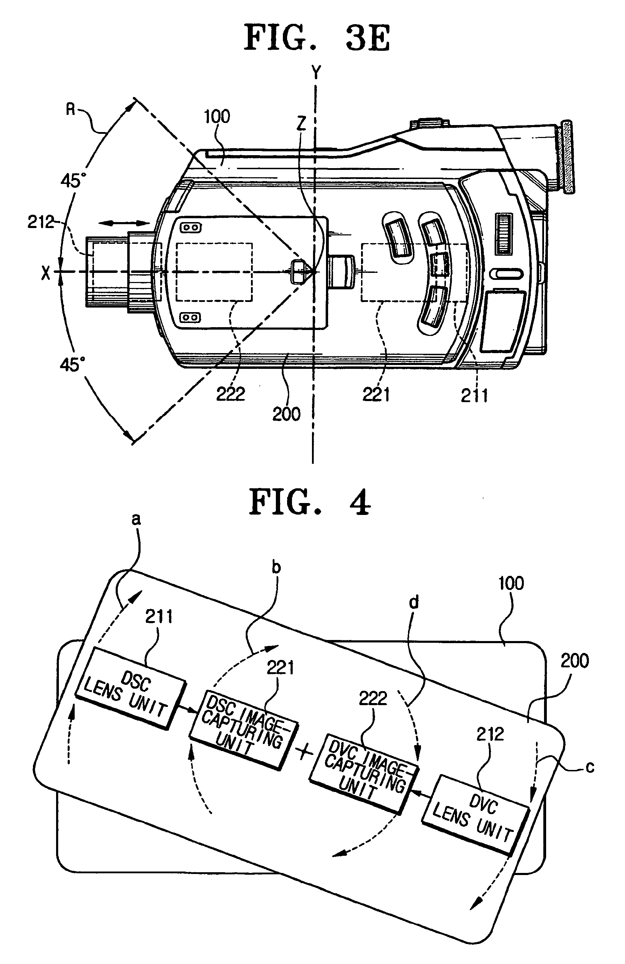

In Figures 3A to 3E, the combination image-capturing unit 200 rotates 180° from its initial position as shown in Figure 3A. In Figure 3A, the combination image-capturing unit 200 is at its initial position. In Figure 3B the combination image-capturing unit 200 has rotated 45° clockwise. In Figure 3C the combination image-capturing unit 200 has rotated another 45° clockwise (90° total). In Figure 3D the combination image-capturing unit 200 has rotated an additional 45° (135° total). In Figure 3E, the combination image-capturing unit 200 has made a 180° rotation from the initial position.

Referring to Figures 3A and 3B, dotted lines denote the DSC lens unit 211, the DSC image-capturing unit 221, the DVC lens unit 212 and the DVC image-capturing unit 222. The DSC lens unit 211 and the DSC image-capturing unit 221 are located in the range of 45 degrees upwards and downwards about the left side of the X-axis, meaning that a DSC operation mode is activated in order for the DSC image-capturing unit 211 to capture images. Referring to Figure 3C, the DSC lens unit 211 and the DSC image-capturing unit 221 are now located in the range of about 45 degrees to the left and right of the upper side of the Y-axis, and, in this case, the DVC lens unit 212 and the DVC image-capturing unit 222 (not shown in Figure 3C), which are symmetrically opposite to the DSC lens unit 211 and the DSC image-capturing unit 221 in the combination image-capturing unit 200, are located in the range of about 45 degrees to the left and right about the lower side of the Y-axis. Accordingly, in this configuration, neither of the image-capturing units captures images since neither of the lens units and image-capturing units are located in the range R of 45 degrees upwards and downwards with respect to the left side of the X-axis.

Referring to Figure 3D and Figure 3E, the DSC lens unit 211 and the DSC image-capturing unit 221 are located in the range of about 45 degrees upwards and downwards about the right side of the X-axis and, in this configuration, the DVC lens unit 212 and DVC image-capturing unit 222 are located in the range R of about 45 degrees upwards and downwards about the left side of the X-axis. Accordingly, image capturing is performed by the DVC image-capturing unit 222 located in the range R of about 45 degrees upwards and downwards about the left side of the X-axis.

Referring to Figure 4, the DSC lens unit 211 built in the combination image-capturing apparatus moves along a first concentric circle a as the combination image-capturing unit 200 rotates with respect to the main body 100 and the DSC image-capturing unit 221 moves along a second concentric circle b as the DSC lens unit 211 moves along the first concentric circle a since the DSC image-capturing unit 221 is located on the same axis as the DSC lens unit 211. The DVC lens unit 212, which is located opposite to the DSC lens unit 211, moves along a third concentric circle c as the DSC lens unit 211 moves along the first concentric circle a and the DVC image-capturing unit 222 moves along a fourth concentric circle d as the DVC lens unit 212 moves along the third concentric circle c since the DVC image-capturing unit 222 is located on the same axis as the DVC lens unit 212.

Referring to Figures 1 and 2, the combination image-capturing apparatus has a main body 100. Units, other than the units provided in the combination image-capturing unit 200 and the mode selection switch unit 300, can be built in or provided in the main body. Figure 2 shows a DSC signal processing unit 101, a DVC signal processing unit 102, a memory 121, a magnetic tape 122, a key input unit (or user input means) 130, a control unit 140, a display unit 150 and the like, which are built in or provided in the main body 100. These units are not necessarily provided in the main body 100, but can be separately installed outside the main body 100. In those cases, the memory 121, the magnetic tape 122, the key input unit 130 and the like may be external units.

The DSC signal processing unit 101 comprises the DSC signal processing block 111 and a DSC signal processing unit 181. The DSC signal processing block 111 converts an analogue image signal received from the DSC image-capturing unit 221 into a digital image signal on a frame by frame basis. The DSC signal processing block 111 can adjust, among other settings, the colour, saturation and brightness settings, as well as the shutter speed when capturing images, in accordance with control signals from the DSC control unit 142. The DSC signal processing unit 181 compresses the digital image data received from the DSC signal processing block 111 into data in the JPEG format. The JPEG-formatted data is stored in the memory 121.

The memory 121 can be a built-in memory that is installed in the main body 100 or a detachable IC memory card. An IC memory card is a recording medium shaped like a card, which contains one or more semiconductor memories in a package, has an interface connector at one end thereof and is used to expand storage capacity (usually of a personal computer, but also for other types of devices that rely on or use digital data). The IC memory cards used for the combination image-capturing apparatus 100 are classified according to the kinds of memories contained therein, therefore, the IC memory cards could be RAM cards, flash memory cards, or another type of card.

The DVC signal processing unit 102 comprises a DVC signal processing block 112 and a video/audio signal processing block 182. The DVC signal processing block 112 converts an analogue video signal received from the DVC image-capturing unit 222 into a digital video signal on a field by field basis. The DVC signal processing block 112 can adjust, among other variables, colour, saturation, brightness and shutter speed when capturing images, in accordance with control signals from the main control unit 141. The video/audio signal processing block 182 compresses the digital video signal received from the DVC signal processing block 112 into data in the DV format, since the DV format is a scheme suitable for compressing moving picture data. The DV-formatted signal is stored on the magnetic tape 122 by means of a VCR deck 124. It is appreciated that other digital video formats, including MPEG4, may be used.

The key input unit 130 is provided with a switch (not shown), for capturing images. The key input unit 130 is a photo-switch that sends a photo trigger signal to the main control unit 141, which causes either the JPEG-formatted signal to be stored in the memory 121 or the DV-formatted signal to be stored on the magnetic tape 122. When a user selects an image to be captured and presses the photo-switch provided on the key input unit 130, a compressed digital signal of the image is stored in the recording medium.

An on-screen display unit 173 receives a control signal from the main control unit 141 and generates specific characters at a specific location of the display unit 150. Furthermore, a captured image is combined with the characters generated from the on-screen display unit 173 and sent to the display unit 150 for display, so that a user can view the captured image through the display.

An IEEE 1394 interface unit 191 is used to communicate data with other external devices, but is mainly used to interface with personal computers (PCs). Through use of the IEEE 1394 interface unit 191, captured digital video data can be sent to a PC or received from a PC for recording on the magnetic tape 122.

The control unit 140 is constructed with the main control unit 141 and the DSC control unit 142. When a photo trigger signal is received from the photo-switch provided on the key input unit 130, the main control unit 141 determines which operation mode, of either the DSC operation mode or the DVC operation mode, is the current operation mode, in response to an operation mode signal received from the mode selection switch unit 300. When the operation mode signal indicates the DSC operation mode, the main control unit 141 controls the DSC control unit 142 to control the DSC lens driving unit 231 and the DSC signal processing block 111. Thereafter, an optical image focused by the DSC lens unit 211 is photoelectrically converted into an electric signal in the DSC image-capturing unit 221. The converted signal is compressed as JPEG-formatted data in the DSC signal processing unit 181 via a signal processing step in the DSC signal processing block 111 and finally stored in the memory 121. Alternatively, when the operation mode signal indicates the DVC operation mode, the main control unit 141 controls the DVC lens driving unit 232, the DVC signal processing block 112, the video/audio signal processing block 182 and the VCR deck driving unit 123 to capture a video image. Thereafter, an optical image that is focused by the DVC lens unit 212 is photoelectrically converted into an electric signal in the DVC image-capturing unit 222. The converted signal is compressed into DV-formatted data in the video/audio signal processing block 182 via a signal processing step in the DSC signal processing block 112 and finally stored on the magnetic tape 122 by means of the VCR deck 124. Accordingly, a user does not have to separately set a recording medium to store a video signal from the DSC and DVC image-capturing units 221, 222 since the combination image-capturing apparatus automatically sets, according to the current operation mode thereof, the recording medium in which a compressed video signal is stored.

Referring to Figure 1, the display unit 150 is disposed on the main body 100 and comprises a viewfinder 151 for displaying images and an LCD panel 152 disposed on the main body 100. As shown in Figure 2, the display unit 150 receives and displays information relating to a selected operation mode from the on-screen display unit 173 in accordance with the control signals of the main control unit 141, The display unit also displays images received from the DSC signal processing unit 181 and the video/audio signal processing block 182.

As shown in Figure 1, a speaker 13 is provided for outputting reproduced sounds and a microphone 132 is provided for capturing external sounds on a part of the main body 100 facing in the image-capturing direction X.

The mode selection switch unit 300 (Figure 2) is disposed so as to interact with the combination image-capturing unit 200 and outputs an operation mode signal to the main control unit 141 in accordance with changes in the position of the combination image-capturing unit 200. In an embodiment of the present invention, the combination image-capturing unit 200 is rotatably coupled to the main body 100, so that the mode selection switch unit 300 outputs an operation mode signal that corresponds to the rotation angle of the combination image-capturing unit 200. The main control unit 141 receives the operation mode signal and determines the current mode of operation accordingly.

As shown in Figure 3A, when the DSC lens unit 211 and the DSC image-capturing unit 221 are located in the range of about 45 degrees upwards and downwards about the left side of the X-axis, the mode selection switch unit 300 outputs a DSC operation mode signal to the main control unit 141 and the control unit 140 activates the DSC image-capturing unit 221 and deactivates the DVC image-capturing unit 222. As shown in Figure 3e, however, when the DVC lens unit 212 and the DVC image-capturing unit 222 are located in the range of about 45 degrees upwards and downwards about the left side of the X axis, the mode selection switch unit 300 outputs a DVC operation mode signal to the main control unit 141 and the control unit 140 activates the DVC image-capturing unit 222 and deactivates the DSC image-capturing unit 221.

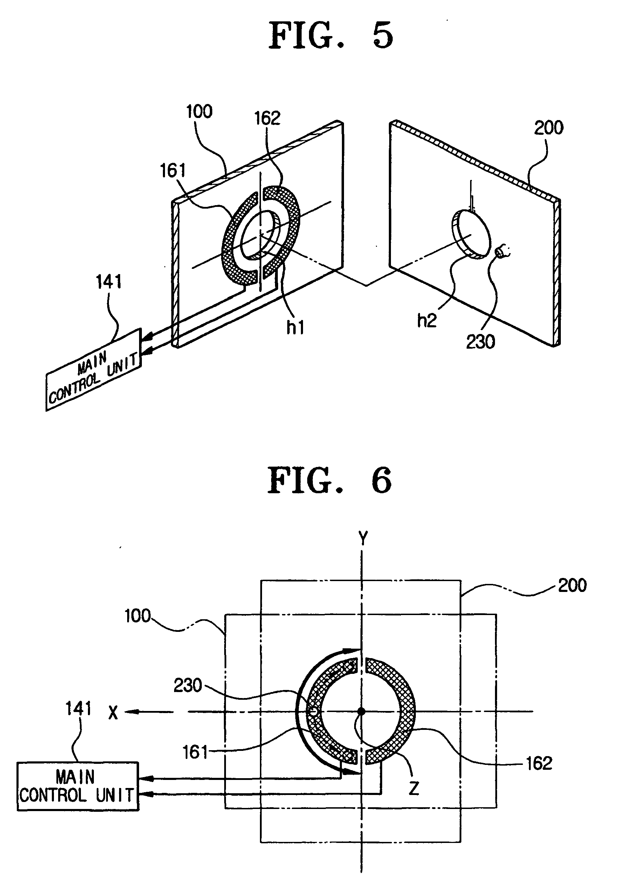

Referring to Figure 5, the switch unit can be configured to comprise first and second contact patterns 161, 162 disposed on the main body 100 and a contact terminal 230 disposed on the combination image-capturing unit 200 so that it is in contact with one of the contact patterns 161, 162. In accordance with the configuration described above, the main body 100 and the combination image-capturing unit 200 are rotatably coupled to each other such that the holes h1 and h2 are opposite each other. Accordingly, the contact terminal 230 comes in contact with the first contact pattern 161 or the second contact pattern 162 according to the rotation angle of the combination image-capturing unit 200 with respect to the main body 100. The first contact pattern 161 is connected to a first port of the main control unit 141 and the second contact pattern 162 is connected to a second port of the main control unit 141.

Referring to Figure 6, when the contact terminal 230 comes in contact with the first contact pattern 161 and the rotation angle of the combination image-capturing unit 200 is in a first range (in which the contact terminal 230 is in a range of about 90 degrees upwards and downwards about the left side of the X-axis), a binary signal of "1", which is the DSC operation mode signal for activating the DSC image-capturing unit 221, is output to the first port of the main control unit 141 and a binary signal of "0" is output to the second port of the main control unit 141. Accordingly, the DSC operation mode is selected and the control unit 140 activates the DSC image-capturing unit 221, enabling the DSC image-capturing unit 221 to capture images, and deactivates the DVC image-capturing unit 222.

Alternatively, when the contact terminal 230 comes in contact with the second contact pattern 162 and the rotation angle of the combination image-capturing unit 200 is in a second range (in which the contact terminal 230 is in the range of about 90 degrees upwards and downwards about the right side of the Y-axis), a binary signal of "1", which is the DVC operation mode signal for activating the DVC image-capturing unit 222, is output to the second port of the main control unit 141 and a binary signal of "0" is output to the first port of the main control unit 141.

The first and second contact patterns 161, 162 are disposed so as to be in contact with the contact terminal 230 over a range of about 180° each. Accordingly, either the DSC or the DVC image-capturing unit 221, 222 will be activated. Activation of either the DSC or DVC image-capturing unit 221, 222 occurs for all rotation angles of the combination image-capturing unit 200 with respect to the main body 100. Preferably, as illustrated in Figure 6, the activated image-capturing unit is located on the left of the Y-axis and is activated for all the rotation angles within that range. Therefore, the DSC and the DVC image-capturing units 221, 222 are activated or deactivated by the switch unit with reference to the Y-axis.

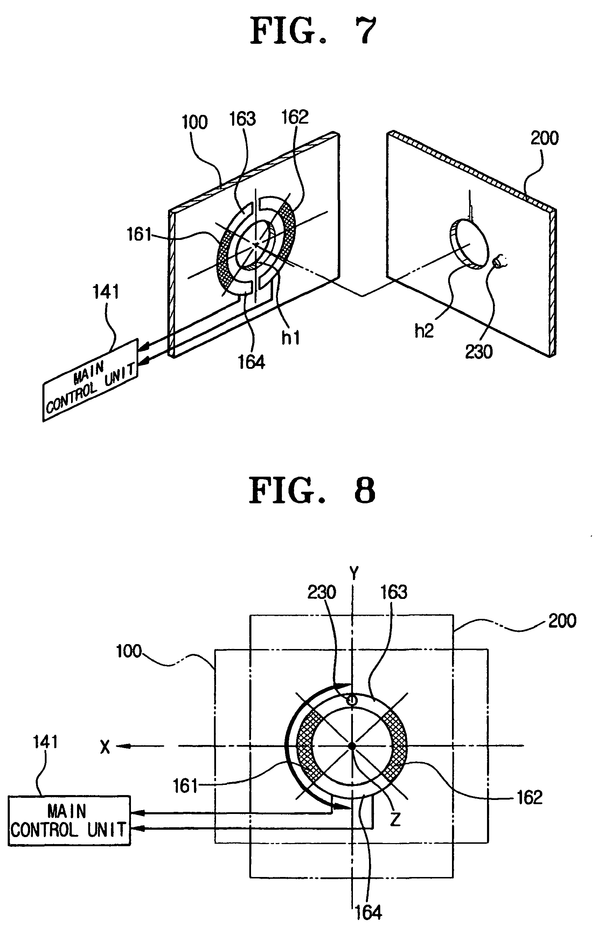

Referring to Figure 7, the switch unit shown includes third and fourth contact patterns 163, 164 in addition to the first and second contact patterns 161 ,162 disposed on the main body 100 and can be configured to include the contact terminal 230 disposed on the combination image-capturing unit 200, so as to come into contact with any one of the contact patterns 161 to 164. Therefore, the contact terminal 230 comes in contact with any of the first to fourth contact patterns 161 to 164 according to the rotation angle of the combination image-capturing unit 200 with respect to the main body 100. The first contact pattern 161 is connected to the first port of the main control unit 141, the second contact pattern 162 is connected to the second port of the main control unit 141 and the third and fourth contact patterns 163, 164 are not connected to the ports of the main control unit 141.

Referring to Figure 8, when the rotation angle of the combination image-capturing unit 200 is in a third range (in which the contact terminal 230 is in the range of 45 degrees to the left and right of the upper side of the Y axis), such that the contact terminal 230 comes in contact with the third contact pattern 163, the operation mode signal is not output to the ports of the main control unit 141. Similarly, the operation mode signal is not output in the case where the contact terminal 230 comes in contact with the fourth contact pattern 164. When the operation mode signal is not received, the control unit 140 deactivates the active image-capturing unit, so that both the DSC and the DVC image-capturing units 221, 222 are deactivated.

When the first to fourth contact patterns 161, 162, 163, 164 are disposed at 90 degree intervals, the DSC image-capturing unit 221 is activated when the contact terminal 230 is located in the range of about 45 degrees upwards and downwards about the left side of the X-axis and the DVC image-capturing unit 222 is activated when the contact terminal 230 is located in the range of about 45 degrees upwards and downwards about the right side of the X-axis. Neither image-capturing unit is activated when the contact terminal 230 is located in the range of about 45 degrees to the left and right about the upper side of the Y-axis or about the lower side of the Y-axis. The purpose of these zones of non-operation for either image-capturing unit is to prevent the lens units 221, 222 from colliding with the main body 100 when the image-capturing units are in the range of 45 degrees to the left and right of the Y-axis. This could occur if a user rotated the combination image-capturing unit 200 such that the DSC and the DVC lens units 211, 212 are externally extended out of the combination image-capturing unit 200 with the zoom-in function set.

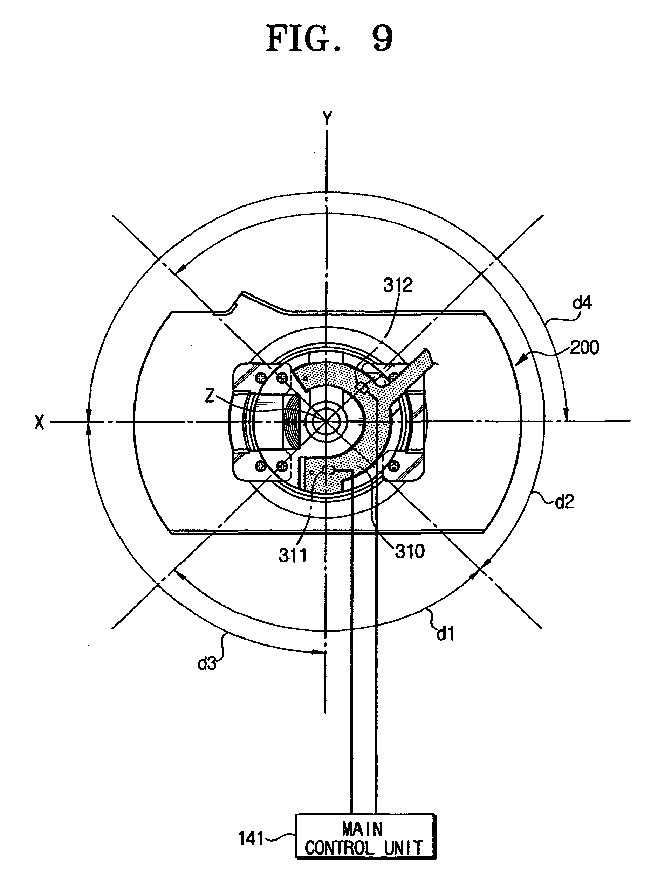

Referring to Figure 9, a mode switch unit 310 is disposed on the side of the main body 100 adjacent to the combination image-capturing unit 200. The DSC mode switch unit 311 and the DVC mode switch unit 312 are disposed on the mode switch unit 310. The DSC mode switch unit 311 is connected to the first port of the main control unit 141 and the DVC mode switch unit 312 is connected to the second port of the main control unit 141. When the combination image-capturing unit 200 is rotated with respect to the main body 100, the mode switch unit 310, the DSC mode switch unit 311 and the DVC mode switch unit 312 are also rotated together with the combination image-capturing unit 200.

The DSC mode switch unit 311 can rotate in a range from d1 to d2 as shown in Figure 9. When the DSC mode switch unit 311 is located in the range of d1, that is, in a range of about 45 degrees to the left and right about the lower side of the Y-axis, a binary signal of "1" is output to the first port of the main control unit 141, wherein the binary signal of "1" is the DSC operation mode signal for activating the DSC image-capturing unit 221, and a binary signal of "0" is output to the second port of the main control unit 141. The DVC mode switch unit 312 can also rotate in the range from d3 to d4. When the DVC mode switch unit 312 is located in the range of d3 as shown in Figure 9 (in a range of about 90 degrees to the left of the lower side of the Y axis), a binary signal of "1" is output to the second port of the main control unit 141, wherein the binary signal of "1" is the DVC operation mode signal for activating the DVC image-capturing unit 222, and a binary signal of "0" is output to the first port of the main control unit 141.

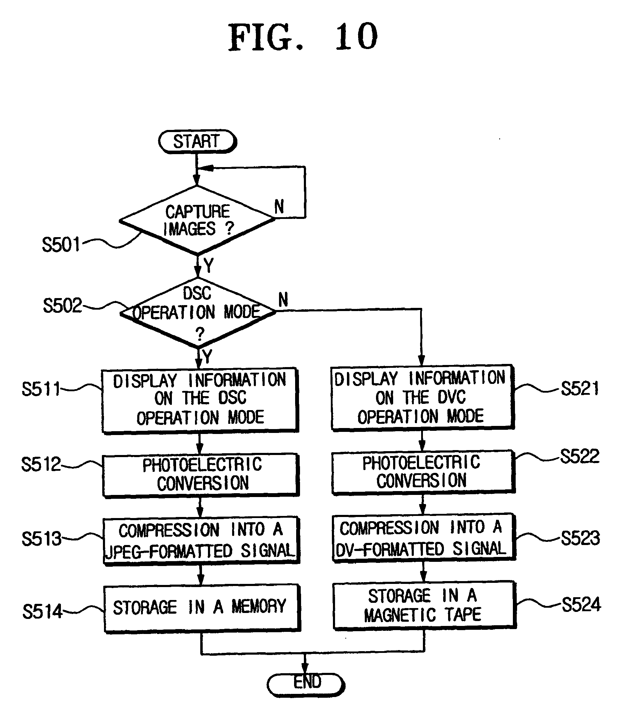

Referring to Figure 10, the main control unit 141 first determines whether a photo trigger command to capture and store images exists (decision step S501). When a photo trigger command is detected in decision step S501 ("Yes" path from decision step S501), the main control unit 141 sets the operation mode in accordance with the operation mode signal received from the mode selection switch unit 300 (decision step S502).

When it is determined that the DSC operation mode is the mode selected in decision step S502, the display unit 150 notifies the user, on the display 150, that the combination image-capturing apparatus is currently operating in the DSC operation mode and displays information on the DSC operation mode (S511). The DSC image-capturing unit 221 then photoelectrically converts an optical image focused through the DSC lens unit 211 into an electric signal and sends the electric signal to the DSC signal processing unit 101 (S512). The DSC signal processing unit 101 compresses the electric signal into a JPEG-formatted signal (S513). The JPEG-formatted signal is then stored in the memory 121 (S514).

Alternatively, when it is determined that the DVC operation mode is the mode selected in decision step S502 ("no" path from decision step S502), the display unit 150 notifies the user, on the display 150, that the combination image-capturing apparatus is currently operating in the DVC operation mode and displays information on the DVC operation mode (S521). The DVC image-capturing unit 222 then photoelectrically converts an optical image focused through the DVC lens unit 212 into an electric signal and sends the electric signal to the DVC signal processing unit 102 (S522). The DVC signal processing unit 102 compresses the electric signal into a DV-formatted signal (S523). The DV-formatted signal is then stored on the magnetic tape 122 by means of the VCR deck 124 (S524).

As described above, a combination image-capturing apparatus is provided, which enables a single photo switch control the storing images in first and second recording media corresponding to first and second image-capturing units independently driven to capture the images. This eliminates the inconvenience of using separate photo switches, since the current operating mode is checked as the user captures the images. Therefore, the size of the image-capturing apparatus is reduced in line with the current trends of the minimization of portable products, and less photo-switches are used.

## Claims

1. A camera apparatus comprising a main body (100), control means (140), user input means (130), a plurality of image capturing means and selecting means (300), wherein the plurality of image capturing means are disposed in a unit (200) which is rotatably attached to the main body (100), the selecting means (300) comprises means (230, 161, 162) for detecting the position of the unit (200) relative to the main body (100) and outputting a position signal and the control means (140) is configured to be responsive to a signal from the user input means (130) to operate one of said plurality of image capturing means, selected in dependence on said position signal, to capture image data, the control means (140) being configured to deactivate the unit (200) when the selecting means (300) is rotated to a predetermined position.

2. An apparatus according to claim 1, wherein the plurality of image capturing means comprises first image capturing means (211, 221, 231) for capturing still images and second image capturing means (212, 222, 232) for capturing moving images.

3. An apparatus according to claim 2 wherein the unit (200) is rotated to a first region to operate using the first image capturing means (211, 221, 231) which is a digital still camera and to a second region to operate using the second image capturing means (212, 222, 232) which is a digital video camera.

4. An apparatus according to claim 2, wherein said position signal includes a first signal set when operating using the first image capture means (211, 221, 231) which is a digital still camera and a second signal set when operating using the second image capture means (212, 222, 232) which is a digital video camera.

5. An apparatus according to claim 4, wherein the selecting means (300) comprises first and second contact patterns (161, 162) provided on the main body (100), and a contact terminal (230) provided on the unit (200) adapted to be in contact with either the first or second contact patterns (161, 162), wherein the contact terminal (230) is in contact with the first contact pattern (161) when using the first image capturing means (211, 221, 231), and the contact terminal (230) is in contact with the second contact pattern (162) when using the second image capturing means (212, 222, 232).

6. An apparatus according to claim 5, wherein the first signal set comprises a first binary signal value of one provided by the first contact pattern (161) and a second binary signal value of zero provided by the second contact pattern (162) when operating using the first image capturing means (211, 221, 231).

7. An apparatus according to claim 5, wherein the second signal set comprises a first binary signal value of zero provided by the first contact pattern (161) and a second binary signal value of one provided by the second contact pattern (162) when operating using the second image capturing means (212, 222, 232).

8. An apparatus according to claim 5, wherein the first contact pattern (161) extends about the left side of a Y axis of the unit (200), wherein the Y axis is formed perpendicular to the image capturing direction that is defined as the X axis and the second contact pattern (162) extends about the right side of a Y axis of the unit (200), wherein the Y axis is formed perpendicular to the image capturing direction that is defined as the X axis.

9. An apparatus according to claim 5, wherein the selecting means (300) further comprises a third and fourth contact pattern (163, 164) provided on the main body (100), and wherein the contact terminal (230) is in contact with the third or fourth contact pattern (163, 164) when the unit (200) is deactivated.

10. An apparatus according to claim 9, wherein the first contact pattern (161) extends above and below the X axis by about 45 degrees both above and below the left side of the Y axis of the apparatus, wherein the Y axis is formed perpendicular to the image capturing direction that is defined as the X axis, the second contact pattern (162) extends above and below an X axis by about 45 degrees both above and below the right side of the Y axis of the apparatus, the third contact pattern (163) extends to the left and right of the Y axis above the X axis by about 45 degrees both to the left and the right side of the Y axis, and the fourth contact pattern (164) extends to the left and right of the Y axis below the X axis by about 45 degrees both to the left and the right side of the Y axis.

11. A method of operating a camera apparatus having a main body (100), control means (140), user input means (130), a plurality of image capturing means and selecting means (300), wherein the plurality of image capturing means are disposed in a unit (200) which is rotatably attached to the main body (100), the method comprising: detecting the position of the unit (200) relative to the main body (100); outputting a position signal; selecting, in dependence on the position signal, one of said plurality of image capture means; responding to a signal from the user input means (130) to operate the selected one of said plurality of image capturing means; and deactivating the unit (200) when the unit (200) is rotated to a predetermined position.

12. A method according to claim 11, comprising capturing still images using first image capturing means (211, 221, 231) and capturing moving images using second image capturing means (212, 222, 232).

13. A method according to claim 12 comprising rotating the unit (200) to a first region to operate using the first image capturing means (211, 221, 231) and rotating the unit to a second region to operate using the second image capturing means (212, 222, 232).

14. A method according to claim 11, wherein said position signal includes a first signal set when operating using the first image capture means (211, 221, 231) and a second signal set when operating using the second image capture means (212, 222, 232).

15. A method according to claim 14, comprising providing, on the main body (100), the selecting means (300) having first and second contact patterns (161, 162), and providing a contact terminal (230), on the unit (200), contacting either the first or second contact patterns (161, 162), wherein the contact terminal (230) is contacting the first contact pattern (161) when using the first image capturing means (211, 221, 231), and the contact terminal (230) is contacting the second contact pattern (162) when using the second image capturing means (212, 222, 232).

16. A method according to claim 15, wherein the first signal set comprises a first binary signal value of one provided by the first contact pattern (161) and a second binary signal value of zero provided by the second contact pattern (162) when operating using the first image capturing means (211, 221, 231).

17. A method according to claim 15, wherein the second signal set comprises a first binary signal value of zero provided by the first contact pattern (161) and a second binary signal value of one provided by the second contact pattern (162) when operating using the second image capturing means (212, 222, 232).

18. A method according to claim 15, comprising extending the first contact pattern (161) about the left side of a Y axis of the unit (200), wherein the Y axis is formed perpendicular to the image capturing direction that is defined as the X axis and extending the second contact pattern (162) about the right side of a Y axis of the unit (200), wherein the Y axis is formed perpendicular to the image capturing direction that is defined as the X axis.

19. A method according to claim 15, comprising providing the selecting means (300) with a third and fourth contact pattern (163, 164) on the main body (100), and wherein the contact terminal (230) is in contact with the third or fourth contact pattern (163, 164) when the unit (200) is deactivated.

20. A method according to claim 19, comprising extending the first contact pattern (161) above and below the X axis by about 45 degrees both above and below the left side of the Y axis of the apparatus, wherein the Y axis is formed perpendicular to the image capturing direction that is defined as the X axis, extending the second contact pattern (162) above and below an X axis by about 45 degrees both above and below the right side of the Y axis of the apparatus, extending the third contact pattern (163) to the left and right of the Y axis above the X axis by about 45 degrees both to the left and the right side of the Y axis, and extending the fourth contact pattern (164) to the left and right of the Y axis below the X axis by about 45 degrees both to the left and the right side of the Y axis.

21. A method according to claim 12, comprising: storing digital still camera image information in a memory if the operating using the first image capturing means (211, 221, 231), otherwise, storing digital video camera image information in the memory.

22. A method according to claim 21, wherein the step of storing digital still camera image information comprises: notifying the user that the apparatus is currently operating using the first image capturing means (211, 221, 231); converting, photoelectrically, an optical image focused through a digital still camera lens unit into an electric signal, and sending the electric signal to a digital still camera signal processing unit; and compressing the electric signal into a JPEG-formatted signal using the digital still camera signal processing unit; and storing the JPEG-formatted signal in the memory.

23. A method according to claim 22, wherein the step of notifying the user comprises: displaying the notification that the apparatus is currently operating using the first image capturing means (211, 221, 231) to the user on a display, together with information about operating using the first image capturing means (211, 221, 231).

24. A method according to claim 21, wherein the step of storing digital video camera information in the memory comprises: notifying the user that the apparatus is currently operating using the second image capturing means (212, 222, 232); converting, photoelectrically, an optical image focused through a digital video camcorder lens unit into an electric signal, and sending the electric signal to a digital video camcorder signal processing unit; compressing the electric signal into a digital video-formatted signal using the digital video camcorder signal processing unit; and storing the digital video-formatted signal on a magnetic tape using a video cassette recorder deck.

25. A method according to claim 24, wherein the step of notifying the user comprises: displaying the notification that the apparatus is currently operating using the second image capturing means (212, 222, 232) to the user on a display, together with information about operating using the second image capturing means (212, 222, 232).

## Patentansprüche

1. Kameravorrichtung, umfassend einen Hauptkörper (100), Steuerungsmittel (140), Benutzer-Eingabemittel (130), eine Mehrzahl von Bilderfassungsmitteln und Auswahlmittel (300), wobei die Mehrzahl von Bilderfassungsmitteln in einer Einheit (200) angeordnet sind, welche drehbar an dem Hauptkörper (100) befestigt ist, die Auswahlmittel (300) Mittel (230, 161, 162) zum Detektieren der Position der Einheit (200) relativ zum Hauptkörper (100) und zum Ausgeben eines Positionssignals umfassen, und die Steuerungsmittel (140) so konfiguriert sind, dass sie empfänglich für ein Signal aus den Benutzer-Eingabemitteln (130) sind, um eines aus der genannten Mehrzahl von Bilderfassungsmitteln zu betätigen, welches in Abhängigkeit von dem genannten Positionssignal ausgewählt wird, um Bilddaten zu erfassen, wobei die Steuerungsmittel (140) so konfiguriert sind, dass sie die Einheit (200) deaktivieren, wenn die Auswahlmittel (300) in eine vorbestimmte Position gedreht werden.

2. Vorrichtung nach Anspruch 1, bei der die Mehrzahl von Bilderfassungsmitteln erste Bilderfassungsmittel (211, 221, 231) zum Erfassen von stehenden Bildern und zweite Bilderfassungsmittel (212, 222, 232) zum Erfassen von bewegten Bildern umfassen.

3. Vorrichtung nach Anspruch 2, bei der die Einheit (200) in einen ersten Bereich gedreht wird, um unter Verwendung der ersten Bilderfassungsmittel (211, 221, 231), welche eine digitale Standbildkamera darstellen, zu arbeiten, und in einen zweiten Bereich, um unter Verwendung der zweiten Bilderfassungsmittel (212, 222, 232) zu arbeiten, welche eine digitale Videokamera darstellen.

4. Vorrichtung nach Anspruch 2, bei der das genannte Positionssignal einen ersten Signalsatz umfasst, wenn sie unter Verwendung der ersten Bilderfassungsmittel (211, 221, 231), welche eine digitale Standbildkamera bilden, arbeitet, und einen zweiten Signalsatz, wenn sie unter Verwendung der zweiten Bilderfassungsmittel (212, 222, 232), welche eine digitale Videokamera bilden, arbeitet.

5. Vorrichtung nach Anspruch 4, bei der die Auswahlmittel (300) ein erstes und ein zweites Kontaktmuster (161, 162) umfassen, welche auf dem Hauptkörper (100) vorgesehen sind, und einen auf der Einheit (200) vorgesehenen Kontaktanschluss (230), der geeignet ist, mit entweder dem ersten oder dem zweiten Kontaktmuster (161, 162) in Kontakt zu sein, wobei der Kontaktanschluss (230) mit dem ersten Kontaktmuster (161) in Kontakt ist, wenn die ersten Bilderfassungsmittel (211, 221, 231) verwendet werden, und der Kontaktanschluss (230) mit dem zweiten Kontaktmuster (162) in Kontakt ist, wenn die zweiten Bilderfassungsmittel (212, 222, 232) verwendet werden.

6. Vorrichtung nach Anspruch 5, bei der der erste Signalsatz einen ersten binären Signalwert von "1" umfasst, welcher durch das erste Kontaktmuster (161) geliefert wird, und einen zweiten binären Signalwert von "0", der durch das zweite Kontaktmuster (162) geliefert wird, wenn sie unter Verwendung der ersten Bilderfassungsmittel (211, 221, 231) arbeitet.

7. Vorrichtung nach Anspruch 5, bei der der zweite Signalsatz einen ersten binären Signalwert von "0" umfasst, welcher von dem ersten Kontaktmuster (161) geliefert wird, und einen zweiten binären Signalwert von "1", welcher von dem zweiten Kontaktmuster (162) geliefert wird, wenn sie unter Verwendung der zweiten Bilderfassungsmittel (212, 222, 232) arbeitet.

8. Vorrichtung nach Anspruch 5, bei der sich das erste Kontaktmuster (161) um die linke Seite einer Y-Achse der Einheit (200) erstreckt, wobei die Y-Achse senkrecht zur Bilderfassungs-Richtung, welche als die X-Achse definiert ist, ausgebildet ist, und sich das zweite Kontaktmuster (162) um die rechte Seite einer Y-Achse der Einheit (200) erstreckt, wobei die Y-Achse senkrecht zur Bilderfassungs-Richtung, welche als die X-Achse definiert ist, ausgebildet ist.

9. Vorrichtung nach Anspruch 5, bei der die Auswahlmittel (300) ferner ein drittes und ein viertes Kontaktmuster (163, 164) umfassen, welche auf dem Hauptkörper (100) vorgesehen sind, und bei der der Kontaktanschluss (230) mit dem dritten oder vierten Kontaktmuster (163, 164) in Kontakt ist, wenn die Einheit (200) deaktiviert ist.

10. Vorrichtung nach Anspruch 9, bei der das erste Kontaktmuster (161) sich oberhalb und unterhalb der X-Achse und ungefähr 45° sowohl oberhalb als auch unterhalb der linken Seite der Y-Achse der Vorrichtung erstreckt, wobei die Y-Achse rechtwinklig zur Bilderfassungs-Richtung, welche als die X-Achse definiert ist, ausgebildet ist, der zweite Kontaktabschnitt (162) sich oberhalb und unterhalb einer X-Achse um ungefähr 45° sowohl oberhalb als auch unterhalb der rechten Seite der Y-Achse der Vorrichtung erstreckt, das dritte Kontaktmuster (163) sich nach links und rechts der Y-Achse oberhalb der X-Achse um ungefähr 45° sowohl zur linken als auch der rechten Seite der Y-Achse erstreckt, und das vierte Kontaktmuster (164) sich nach links und rechts von der Y-Achse unterhalb der X-Achse um ungefähr 45° sowohl zur linken als auch zur rechten Seite der Y-Achse erstreckt.

11. Verfahren zum Betreiben einer Kameravorrichtung, welche einen Hauptkörper (100) umfasst, Steuerungsmittel (140), Benutzer-Eingabemittel (130), eine Mehrzahl von Bilderfassungsmitteln und Auswahlmittel (300), wobei die Mehrzahl von Bilderfassungsmitteln in einer Einheit (200) angeordnet ist, welche drehbar an dem Hauptkörper (100) befestigt ist, wobei das Verfahren Folgendes umfasst: das Detektieren der Position der Einheit (200) relativ zum Hauptkörper (100), das Ausgeben eines Positionssignals, das Auswählen, in Abhängigkeit von dem Positionssignal, eines aus der genannten Mehrzahl von Bilderfassungsmitteln, das Antworten auf ein Signal aus den Benutzer-Eingabemitteln (130), um das unter der genannten Mehrzahl von Bilderfassungsmitteln ausgewählte Mittel zu betätigen, und das Deaktivieren der Einheit (200), wenn die Einheit (200) in eine vorbestimmte Position gedreht wird.

12. Verfahren nach Anspruch 11, umfassend das Erfassen von Standbildern unter Verwendung der ersten Bilderfassungsmittel (211, 221, 231) und das Erfassen von bewegten Bildern unter Verwendung der zweiten Bilderfassungsmittel (212, 222, 232).

13. Verfahren nach Anspruch 12, umfassend das Drehen der Einheit (200) in einen ersten Bereich, zum Betrieb unter Verwendung der ersten Bilderfassungsmittel (211, 221, 231) und das Drehen der Einheit in einem zweiten Bereich, zum Betrieb unter Verwendung der zweiten Bilderfassungsmittel (212, 222, 232).

14. Verfahren nach Anspruch 11, bei dem das genannte Positionssignal einen ersten Signalsatz umfasst, wenn unter Verwendung der ersten Bilderfassungsmittel (211, 221, 231) betrieben wird, und einen zweiten Signalsatz, wenn unter Verwendung der zweiten Bilderfassungsmittel (212, 222, 232) betrieben wird.

15. Verfahren nach Anspruch 14, welches es umfasst, auf dem Hauptkörper (100) die Auswahlmittel (300) vorzusehen, welche ein erstes und ein zweites Kontaktmuster (161, 162) umfassen, und einen Kontaktanschluss (230) auf der Einheit (200) vorzusehen, welcher entweder das erste oder das zweite Kontaktmuster (161, 162) kontaktiert, wobei der Kontaktanschluss (230) das erste Kontaktmuster (161) kontaktiert, wenn die ersten Bilderfassungsmittel (211, 221, 231) verwendet werden, und der Kontaktanschluss (230) das zweite Kontaktmuster (162) kontaktiert, wenn die zweiten Bilderfassungsmittel (212, 222, 232) verwendet werden.

16. Verfahren nach Anspruch 15, bei dem erste Signalsatz einen ersten binären Signalwert von "1" umfasst, welcher von dem ersten Kontaktmuster (161) geliefert wird, und einen zweiten binären Signalwert von "0", welcher von dem zweiten Kontaktmuster (162) geliefert wird, wenn unter Verwendung der ersten Bilderfassungsmittel (211, 221, 231) betrieben wird.

17. Verfahren nach Anspruch 15, bei dem der zweite Signalsatz einen ersten binären Signalwert von "0" umfasst, welcher von dem ersten Kontaktmuster (161) geliefert wird, und einen zweiten binären Signalwert von "1", welcher von dem zweiten Kontaktmuster (162) geliefert wird, wenn unter Verwendung der zweiten Bilderfassungsmittel (212, 222, 232) betrieben wird.

18. Verfahren nach Anspruch 15, umfassend das Erstrecken des ersten Kontaktmusters (161) um die linke Seite einer Y-Achse der Einheit (200), wobei die Y-Achse senkrecht zu der Bilderfassungs-Richtung, welche als die X-Achse definiert ist, ausgebildet ist, und das Erstrecken des zweiten Kontaktmusters (162) um die rechte Seite einer Y-Achse der Einheit (200), wobei die Y-Achse senkrecht zu der Bilderfassungs-Richtung, welche als die X-Achse definiert ist, ausgebildet ist.

19. Verfahren nach Anspruch 15, welches es umfasst, die Auswahlmittel (300) mit einem dritten und einem vierten Kontaktmuster (163, 164) auf dem Hauptkörper (100) zu versehen, und wobei der Kontaktanschluss (230) mit dem dritten oder vierten Kontaktmuster (163, 164) in Kontakt ist, wenn die Einheit (200) deaktiviert ist.

20. Verfahren nach Anspruch 19, umfassend das Erstrecken des ersten Kontaktmusters (161) oberhalb und unterhalb der X-Achse um ungefähr 45° sowohl oberhalb als auch unterhalb der linken Seite der Y-Achse der Vorrichtung, wobei die Y-Achse senkrecht zu der Bilderfassungs-Richtung ausgebildet ist, welche als die X-Achse definiert ist, das Erstrecken des zweiten Kontaktmusters (162) oberhalb und unterhalb einer X-Achse um ungefähr 45° sowohl oberhalb als auch unterhalb der rechten Seite der Y-Achse der Vorrichtung, das Erstrecken des dritten Kontaktmusters (163) nach links und nach rechts der Y-Achse oberhalb der X-Achse um ungefähr 45° sowohl zur linken als auch zur rechten Seite der Y-Achse und das Erstrecken des vierten Kontaktmusters (164) zur linken und rechten Seite der Y-Achse unterhalb der X-Achse um ungefähr 45° sowohl zur linken als auch zur rechten Seite der Y-Achse.

21. Verfahren nach Anspruch 12, umfassend: das Speichern von Digital-Standbildkamera-Bildinformationen in einem Speicher, wenn unter Verwendung der ersten Bilderfassungsmittel (211, 221, 231) betrieben wird, andernfalls das Speichern von Digitalvideokamera-Bildinformationen in dem Speicher.

22. Verfahren nach Anspruch 21, wobei der Schritt des Speicherns der Digital-Standbildkamera-Bildinformationen Folgendes umfasst: das Benachrichtigen des Benutzers, dass die Vorrichtung gegenwärtig unter Verwendung der ersten Bilderfassungsmittel (211, 221, 231) betrieben wird, das fotoelektrische Umwandeln eines optischen Bildes, welches durch eine Digital-Standbildkamera-Linseneinheit fokussiert wird, in ein elektrisches Signal, und das Senden des elektrischen Signals in eine Digital-Standbildkamera-Signalverarbeitungseinheit, und das Komprimieren des elektrischen Signals in ein JPEGformatiertes Signal unter Verwendung der Digital-Standbildkamera-Signalverarbeitungseinheit, und das Speichern des JPEG-formatierten Signals in dem Speicher.

23. Verfahren nach Anspruch 22, bei dem der Schritt des Benachrichtigens des Benutzers Folgendes umfasst: das Anzeigen der Benachrichtigung an den Benutzer, dass die Vorrichtung gegenwärtig unter Verwendung der ersten Bilderfassungsmittel (211, 221, 231) betrieben wird, auf einer Anzeige, zusammen mit Informationen über den Betrieb unter Verwendung der ersten Bilderfassungsmittel (221, 221, 231).

24. Verfahren nach Anspruch 21, bei dem der Schritt des Speicherns von Digitalvideokamera-Informationen in dem Speicher Folgendes umfasst: das Benachrichtigen des Benutzers, dass die Vorrichtung gegenwärtig unter Verwendung der zweiten Bilderfassungsmittel (212, 222, 232) betrieben wird, das fotoelektrische Umwandeln eines optischen Bildes, welches durch eine Digitalvideocamcorder-Linseneinheit fokussiert wird, in ein elektrisches Signal, und das Senden des elektrischen Signals an eine Digitalvideocamcorder-Signalverarbeitungseinheit, das Komprimieren des elektrischen Signals in ein Digitalvideo-formatiertes Signal unter Verwendung der Digitalvideocamcorder-Signalverarbeitungseinheit, und das Speichern des Digitalvideo-formatierten Signals auf einem Magnetband unter Verwendung eines Videokassettenrecorders.

25. Verfahren nach Anspruch 24, bei dem der Schritt des Benachrichtigens des Benutzers Folgendes umfasst: das Anzeigen der Benachrichtigung an den Benutzer, dass die Vorrichtung gegenwärtig unter Verwendung der zweiten Bilderfassungsmittel (212, 222, 232) betrieben wird, auf einem Display, zusammen mit Information über den Betrieb unter Verwendung der zweiten Bilderfassungsmittel (212, 222, 232) .

## Revendications

1. Appareil de prise de vues comprenant un corps principal (100), un moyen de commande (140), un moyen d'entrée d'utilisateur (130), une pluralité de moyens de capture d'images et un moyen de sélection (300), dans lequel la pluralité de moyens de capture d'images est disposée dans une unité (200) qui est fixée de manière rotative au corps principal (100), le moyen de sélection (300) comprend des moyens (230, 161, 162) pour détecter la position de l'unité (200) par rapport au corps principal (100) et sortir un signal de position et le moyen de commande (140) est configuré pour répondre à un signal provenant du moyen d'entrée d'utilisateur (130) afin d'actionner l'un de ladite pluralité de moyens de capture d'images, sélectionné en fonction dudit signal de position, afin de capturer des données d'images, le moyen de commande (140) étant configuré pour désactiver l'unité (200) quand le moyen de sélection (300) est tourné sur une position prédéterminée.

2. Appareil selon la revendication 1, dans lequel la pluralité de moyens de capture d'images comprend un premier moyen de capture d'images (211, 221, 231) pour capturer des images fixes et un second moyen de capture d'images (212, 222, 232) pour capturer des images animées.

3. Appareil selon la revendication 2, dans lequel l'unité (200) est tournée vers une première région pour fonctionner au moyen du premier moyen de capture d'images (211, 221, 231) qui est un appareil photographique numérique et vers une deuxième région pour fonctionner au moyen du second moyen de capture d'images (212, 222, 232) qui est un caméscope numérique.

4. Appareil selon la revendication 2, dans lequel ledit signal de position comporte un premier ensemble de signaux lors du fonctionnement au moyen du premier moyen de capture d'images (211, 221, 231) qui est un appareil photographique numérique et un deuxième ensemble de signaux lors du fonctionnement au moyen du second moyen de capture d'images (212, 222, 232) qui est un caméscope numérique.

5. Appareil selon la revendication 4, dans lequel le moyen de sélection (300) comprend des première et deuxième configurations de contact (161, 162) fournies sur le corps principal (100), et une borne de contact (230) fournie sur l'unité (200) adaptée pour être en contact avec soit la première, soit la deuxième configuration de contact (161, 162), dans lequel la borne de contact (230) est en contact avec la première configuration de contact (161) quand le premier moyen de capture d'images (211, 221, 231) est utilisé, et la borne de contact (230) est en contact avec la deuxième configuration de contact (162) quand le second moyen de capture d'images (212, 222, 232) est utilisé.

6. Appareil selon la revendication 5, dans lequel le premier ensemble de signaux comprend une première valeur de signal binaire de un fournie par la première configuration de contact (161) et une deuxième valeur de signal binaire de zéro fournie par la deuxième configuration de contact (162) lors du fonctionnement en utilisant le premier moyen de capture d'images (211, 221, 231).

7. Appareil selon la revendication 5, dans lequel le second ensemble de signaux comprend une première valeur de signal binaire de zéro fournie par la première configuration de contact (161) et une deuxième valeur de signal binaire de un fournie par la deuxième configuration de contact (162) lors du fonctionnement en utilisant le second moyen de capture d'images (212, 222, 232).

8. Appareil selon la revendication 5, dans lequel la première configuration de contact (161) s'étend sur le côté gauche d'un axe Y de l'unité (200), où l'axe Y est formé perpendiculairement au sens de capture d'images qui est défini comme l'axe X et la deuxième configuration de contact (162) s'étend sur le côté droit d'un axe Y de l'unité (200), où l'axe Y est formé perpendiculairement au sens de capture d'images qui défini comme l'axe X.

9. Appareil selon la revendication 5, dans lequel le moyen de sélection (300) comprend en outre une troisième et une quatrième configuration de contact (163, 164) fournies sur le corps principal (100), et dans lequel la borne de contact (230) est en contact avec la troisième ou la quatrième configuration de contact (163, 164) quand l'unité (200) est désactivée.

10. Appareil selon la revendication 9, dans lequel la première configuration de contact (161) s'étend au-dessus et en dessous de l'axe X par environ 45 degrés à la fois au-dessus et en dessous du côté gauche de l'axe Y de l'appareil, dans lequel l'axe Y est formé perpendiculairement au sens de capture d'images qui est défini comme l'axe X, la deuxième configuration de contact (162) s'étend au-dessus et en dessous d'un axe X par environ 45 degrés à la fois au-dessus et en dessous du côté droit de l'axe Y de l'appareil, la troisième configuration de contact (163) s'étend vers la gauche et vers la droite de l'axe Y au-dessus de l'axe X par environ 45 degrés à la fois vers la gauche et vers la droite de l'axe Y, et la quatrième configuration de contact (164) s'étend vers la gauche et vers la droite de l'axe Y en dessous de l'axe X par environ 45 degrés à la fois vers la gauche et vers la droite de l'axe Y.

11. Procédé d'exploitation d'un appareil de prises de vue ayant un corps principal (100), un moyen de commande (140), un moyen d'entrée d'utilisateur (130), une pluralité de moyens de capture d'images et un moyen de sélection (300), dans lequel la pluralité de moyens de capture d'images est disposée dans une unité (200) qui est fixée de manière rotative au corps principal (100), le procédé comprenant : la détection de la position de l'unité (200) par rapport au corps principal (100) ; la sortie d'un signal de position ; la sélection, en fonction du signal de position, de l'un de ladite pluralité de moyens de capture d'images ; la réponse à un signal provenant du moyen d'entrée d'utilisateur (130) afin d'actionner le moyen sélectionné de ladite pluralité de moyens de capture d'images ; et désactivation de l'unité (200) quand l'unité (200) est tournée sur une position prédéterminée.

12. Procédé selon la revendication 11, comprenant la capture d'images fixes au moyen d'un premier moyen de capture d'images (211, 221, 231) et la capture d'images animées au moyen d'un second moyen de capture d'images (212, 222, 232).

13. Procédé selon la revendication 12, comprenant la rotation de l'unité (200) vers une première région pour fonctionner au moyen du premier moyen de capture d'images (211, 221, 231) et la rotation de l'unité vers une deuxième région pour fonctionner au moyen du second moyen de capture d'images (212, 222, 232).

14. Procédé selon la revendication 11, dans lequel ledit signal de position comporte un premier ensemble de signaux lors du fonctionnement au moyen du premier moyen de capture d'images (211, 221, 231) et un deuxième ensemble de signaux lors du fonctionnement au moyen du second moyen de capture d'images (212, 222, 232).

15. Procédé selon la revendication 14, comprenant la fourniture, sur le corps principal (100), du moyen de sélection (300) comprenant des première et deuxième configurations de contact (161, 162), et la fourniture d'une borne de contact (230), sur l'unité (200), contactant soit la première, soit la deuxième configuration de contact (161, 162), dans lequel la borne de contact (230) est en contact avec la première configuration de contact (161) quand le premier moyen de capture d'images (211, 221, 231) est utilisé, et la borne de contact (230) est en contact avec la deuxième configuration de contact (162) quand le second moyen de capture d'images (212, 222, 232) est utilisé.

16. Procédé selon la revendication 15, dans lequel le premier ensemble de signaux comprend une première valeur de signal binaire de un fournie par la première configuration de contact (161) et une deuxième valeur de signal binaire de zéro fournie par la deuxième configuration de contact (162) lors du fonctionnement en utilisant le premier moyen de capture d'images (211, 221, 231).

17. Procédé selon la revendication 15, dans lequel le second ensemble de signaux comprend une première valeur de signal binaire de zéro fournie par la première configuration de contact (161) et une deuxième valeur de signal binaire de un fournie par la deuxième configuration de contact (162) lors du fonctionnement en utilisant le second moyen de capture d'images (212, 222, 232).

18. Procédé selon la revendication 15, comprenant la disposition de la première configuration de contact (161) sur le côté gauche d'un axe Y de l'unité (200), où l'axe Y est formé perpendiculairement au sens de capture d'images qui est défini comme l'axe X et la disposition de la deuxième configuration de contact (162) sur le côté droit d'un axe Y de l'unité (200), où l'axe Y est formé perpendiculairement au sens de capture d'images qui est défini comme l'axe X.

19. Procédé selon la revendication 15, comprenant la fourniture du moyen de sélection (300) avec une troisième et une quatrième configuration de contact (163, 164) sur le corps principal (100), et dans lequel la borne de contact (230) est en contact avec la troisième ou la quatrième configuration de contact (163, 164) quand l'unité (200) est désactivée.

20. Procédé selon la revendication 19, comprenant la disposition de la première configuration de contact (161) au-dessus et en dessous de l'axe X par environ 45 degrés à la fois au-dessus et en dessous du côté gauche de l'axe Y de l'appareil, dans lequel l'axe Y est formé perpendiculairement au sens de capture d'images qui est défini comme l'axe X, la disposition de la deuxième configuration de contact (162) au-dessus et en dessous d'un axe X par environ 45 degrés à la fois au-dessus et en dessous du côté droit de l'axe Y de l'appareil, la disposition de la troisième configuration de contact (163) vers la gauche et vers la droite de l'axe Y au-dessus de l'axe X par environ 45 degrés à la fois vers la gauche et vers la droite de l'axe Y, et la disposition de la quatrième configuration de contact (164) vers la gauche et vers la droite de l'axe Y en dessous de l'axe X par environ 45 degrés à la fois vers la gauche et vers la droite de l'axe Y.

21. Procédé selon la revendication 12, comprenant :
la mémorisation d'informations d'images d'appareil photographique numérique dans une mémoire lors du fonctionnement en utilisant le premier moyen de capture d'images (211, 221, 232), sinon la mémorisation d'informations d'images de caméscope numérique dans la
mémoire.

22. Procédé selon la revendication 21, dans lequel l'étape de mémorisation d'informations d'images d'appareil photographique numérique comprend : la notification à l'utilisateur que l'appareil fonctionne actuellement au moyen du premier moyen de capture d'images (211, 221, 231) ; la conversion, photoélectriquement, d'une image optique focalisée à travers une lentille d'appareil photographique numérique en un signal électrique, et l'envoi du signal électrique à une unité de traitement de signaux d'appareil photographique numérique ; et compression du signal électrique en un signal de format JPEG au moyen de l'unité de traitement de signaux d'appareil photographique numérique ; et mémorisation du signal de format JPEG dans la mémoire.

23. Procédé selon la revendication 22, dans lequel l'étape de notification de l'utilisateur comprend :
l'affichage de la notification à l'utilisateur que l'appareil fonctionne actuellement au moyen du premier moyen de capture d'images (211, 221, 231) sur un affichage, avec des informations sur le fonctionnement au moyen du premier moyen de capture d'images (211, 221, 231).

24. Procédé selon la revendication 21, dans lequel l'étape de mémorisation d'informations de caméscope numérique dans la mémoire comprend : la notification à l'utilisateur que l'appareil fonctionne actuellement au moyen du second moyen de capture d'images (212, 222, 232) ; la conversion, photoélectriquement, d'une image optique focalisée à travers une lentille de caméscope numérique en un signal électrique, et l'envoi du signal électrique à une unité de traitement de signaux de caméscope numérique ; la compression du signal électrique en un signal de format vidéo numérique au moyen de l'unité de traitement de signaux de caméscope numérique ; et la mémorisation du signal de format vidéo numérique sur une bande magnétique en utilisant une platine de magnétoscope.

25. Procédé selon la revendication 24, dans lequel l'étape de notification de l'utilisateur comprend :
l'affichage de la notification à l'utilisateur que l'appareil fonctionne actuellement au moyen du second moyen de capture d'images (212, 222, 232) sur un affichage, avec des informations sur le fonctionnement au moyen du second moyen de capture d'images (212, 222, 232) .
